(19) **Europäisches Patentamt**

**European Patent Office**

**Office européen des brevets**

(11) Veröffentlichungsnummer: **0 347 744**

**A1**

(12) **EUROPÄISCHE PATENTANMELDUNG**

(21) Anmeldenummer: **89110857.3**

(22) Anmeldetag: **15.06.89**

(51) Int. Cl.4: **D05C 15/00 , F16C 29/02**

(30) Priorität: **22.06.88 DE 3821048**

(43) Veröffentlichungstag der Anmeldung:
**27.12.89 Patentblatt 89/52**

(84) Benannte Vertragsstaaten:
**AT BE CH DE ES FR GB GR IT LI LU NL SE**

(71) Anmelder: **Knott, Reinhold**
**Stauffenbergstrasse 21**
**D-6451 Mainhausen 2(DE)**

(72) Erfinder: **Knott, Reinhold**
**Stauffenbergstrasse 21**
**D-6451 Mainhausen 2(DE)**

(74) Vertreter: **Schumacher, Bernd, Dipl.-Ing.**
**Am Schwaberg 13**
**D-6450 Hanau 6(DE)**

(54) **Führungsglied.**

(57) Ein Führungsglied zum etwa vertikalen Führen der die Nadelbarren (22) von Tuftingmaschinen hin- und herbewegenden Stößel (20) zeichnet sich erfindungsgemäß dadurch aus, daß das Führungsglied als wartungsfreie, insbesondere ölfreie, Gleitführungsbuchse (16, 18) ausgebildet ist oder zumindest eine solche Gleitführungsbuchse (16, 18) aufweist. Dadurch können eine Ölschmierung der Stößel und hiermit verbundene sichtbare Teppichverunreinigungen insbesondere im Maschinenstillstand vermieden werden.

Fig. 1

EP 0 347 744 A1

## Führungsglied

Die Erfindung betrifft ein Führungsglied nach dem Oberbegriff von Patentanspruch 1 und eine Anwendung von Gleitführungsbuchsen gemäß Patentanspruch 16.

Seit langem werden die die Nadelbarren von Tuftingmaschinen bewegenden Stößel mit relativ großem Spiel (300 bis 400 μm) in vertikal ausgerichteten Führungsgliedern aus Kupfer oder Sintermetall gehalten. Aus der großen Bewegungsfrequenz (ca. 1000 pro Minute) ergibt sich eine erhebliche mechanische Beanspruchung. Es ist erforderlich, die Stößel oberhalb des Führungsgliedes zu ölen, um einen gewissen Gleiteffekt im Bereich des Führungsgliedes zu erzielen und den mechanischen Abrieb etwas zu vermindern. Die langjährige Praxis hat gezeigt, daß sich in diesem Maschinenbereich wiederholt Probleme einstellen, einerseits infolge des relativ häufig erforderlichen Austausches der schnell verschleißenden Führungsglieder und andererseits infolge des längs des Stößels und durch das Führungsglied auf den darunterliegenden Teppich gelangende Schmieröls. Dieses führt bei den bestehenden Tuftingmaschinen in allgemein bekannter Weise ständig zu Verunreinigungsproblemen, insbesondere im Falle eines Maschinenstillstandes, bei dem nicht nur kleine Ölverunreinigungen, sondern regelrechte Ölflecken entstehen.

Der vorliegenden Erfindung liegt die Aufgabe zugrunde, ein Führungsglied der im Oberbegriff genannten Art mit einfachen Maßnahmen so auszubilden, daß die genannten Ölverschmutzungsprobleme sicher vermieden werden.

Zur Lösung der gestellten Aufgabe zeichnet sich ein Führungsglied der im Oberbegriff von Patentanspruch 1 genannten Art erfindungsgemäß durch die im Kennzeichen dieses Anspruchs aufgeführten Merkmale aus. Somit ist es in äußerst vorteilhafter Weise möglich, in diesem besonders kritischen Maschinenbereich eine Stößelölung ganz zu vermeiden und ausschließlich eine Trockenschmierung im Sinne des Einsatzes einer wartungsfreien Gleitführungsbuchse vorzusehen. Auch bei längerem Maschinenstillstand können somit keinerlei Ölverschmutzungsschäden des darunter befindlichen Teppichs auftreten. Für den Maschinenanwender ist dieses äußerst vorteilhaft, weil er den Einsatz von Tuftingmaschinen wesentlich flexibler gestalten kann und insbesondere Stillstandszeiten nicht zu befürchten hat. Auch die gesamte Handhabung wird erleichtert, weil kein Kompromiß zwischen der Häufigkeit sowie Intensität der Stößelölung, dem Maschinenbetrieb und der Abnutzung im Bereich der Führungsglieder getroffen werden muß. Bisher wäre es erforderlich gewesen, insbesondere bei der Herstellung hochwertiger Teppichware und unvermeidbarer Maschinenlaufunterbrechungen die Stößelölung zu reduzieren, damit die Verunreinigungsschäden überschaubar bleiben; das jedoch hätte zu erheblich größeren Maschinenabnutzungen im Bereich der Führungsglieder und damit verbundenen Betriebskosten geführt. Mit der vorliegenden Erfindung lassen sich alle diese Nachteile vermeiden.

Die Weiterbildung von Anspruch 2 stellt sicher, daß die im Bereich der Gleitfläche unvermeidbar auftretende Wärmebelastung gut abfließen kann und somit auch unter Berücksichtigung der schnellen Relativbewegungen keine übermäßige Temperaturerhöhung auftritt, die anderenfalls die reibungsarme Beschichtung beschädigen könnte.

Im praktischen Betrieb haben sich die Weiterbildungen der Ansprüche 3 und 4 als äußerst zweckmäßig erwiesen. Es ergibt sich ein ausgezeichneter Trockengleiteffekt, und die relativ große Dicke der Beschichtung wurde gewählt, um diesen Effekt auch unter Berücksichtigung der äußeren Betriebseinflüsse, insbesondere der Stößelbewegungen, langzeitig aufrecht zu erhalten. Für das Aufbringen der Polytetrafluoräthylen-Beschichtung hat sich die Weiterbildung von Anspruch 5 als günstig erwiesen.

Im praktischen Betrieb hat sich ferner ein Träger gemäß der Weiterbildung von Anspruch 6, insbesondere gemäß der Weiterbildung von Anspruch 7, als günstig erwiesen, weil dieser bei ausreichender Festigkeit und geringem Gewicht einen genügend schnellen Wärmeabfluß gewährleistet. Die relativ große Oberflächenhärte gemäß der Weiterbildung von Anspruch 8 führt dabei zu einer großen Dauerstandfestigkeit.

Bisher war bei Tuftingmaschinen ein relativ großes Stößelspiel von etwa 300 bis 400 um erforderlich, was sich auch hinsichtlich auftretender Vibrationen als nachteilig erwies. Die Weiterbildungen gemäß Anspruch 9 und insbesondere Anspruch 10 erlaubt mit kleinerem Stößelspiel einen ruhigen, leisen, verschleißarmen Betrieb, ferner eine längere Lebensdauer und größere Betriebsgeschwindigkeiten.

Für den praktischen Betriebseinsatz hat sich die Weiterbildung von Anspruch 11 als besonders zweckmäßig erwiesen. Die einzelnen Lagerbereiche sind stets fluchtend, wodurch der Einbau einfach und schnell erfolgen kann.

Die Weiterbildung von Anspruch 12 ermöglicht es, einen größeren, sehr stabilen Buchsenhalter einzusetzen und den Materialaufwand für die eigentliche Gleitführungsbuchse relativ klein zu halten. Diese kann in sehr einfacher Weise in dem Buchsenhalter festgehalten werden.

Grundsätzlich wäre es möglich, die Gleitführungsbuchse durch den gesamten Buchsenhalter verlaufen zu lassen. Die Weiterbildung von Anspruch 13 ermöglicht jedoch bei ausreichender Stößelführung wiederum eine Reduzierung des Materialaufwandes für die Gleitführungsbuchsen, da diese insgesamt kürzer ausgebildet sein können.

Die Weiterbildungen der Ansprüche 14 und 15 eignen sich für besonders hohe Betriebsanforderungen vor allem hinsichtlich eines äußerst niedrigen Verschleißes selbst bei sehr großen Relativgeschwindigkeiten und Belastungen.

Die Weiterbildung von Anspruch 16 ermöglicht ein Aufspritzen oder Aufdampfen von Trockenschmiermittel zum Herstellen einer geeigneten Gleitführungsbuchse.

Normalerweise wird der Stößel aus Stahl hergestellt. Die Weiterbildung von Anspruch 17 kann bei bestimmten Anwendungsfällen äusserst zweckmäßig sein, um den Wärmeabfluß noch weiter zu verbessern und die Gleitschichten zu schonen.

Zur Lösung der gestellten Aufgabe wird ferner eine Anwendung gemäß Anspruch 18 vorgeschlagen. Demnach ist es möglich, auch vorhandene geeignete Gleitführungsbuchsen einzusetzen, das Stößelspiel entsprechend zu reduzieren und auf eine Ölschmierung des Stößels ganz zu verzichten.

Die Erfindung wird nachfolgend an zeichnerisch dargestellten Ausführungsbeispielen näher erläutert. Es zeigen:

Figur 1 - ein Führungsglied mit eingesetzten Gleitführungsbuchsen gemäß einer ersten Ausführungsform und

Figur 2 - eine als Führungsglied ausgebildete Gleitführungsbuchse gemäß einer zweiten Ausführungsform.

Ein beispielsweise aus Kupfer oder dergleichen bestehender Buchsenhalter 10 weist Flansche 12 auf, die über nicht näher bezeichnete Bohrungen an einem nicht dargestellten Maschinenkörper einer Tuftingmaschine zu befestigen sind. In einem zentralen Durchlaß 14 befinden sich endseitig eingebracht wartungsfreie (trockenschmierfähige bzw. trockenlauffähige) Gleitführungsbuchsen 16, 18, die in dem Durchlaß 14 durch Preßsitz und/oder Verklebung gehalten sind. An den Innenseiten der Gleitführungsbuchsen 16, 18 befindet sich eine gut gleitfähige Beschichtung 19, beispielsweise eine solche aus Polytetrafluoräthylen (PTFE) mit einer Dicke von beispielsweise etwa 40 bis 60 μm.

Ein Stößel 20 durchdringt die Gleitführungsbuchsen 16, 18 mit einem Bewegungsspiel von beispielsweise nur etwa 20 bis 30 μm und besteht beispielsweise aus Stahl oder zur besseren Wärmeableitung aus einer Kupfer-Beryllium-Legierung oder dergleichen. Der Stößel 20 trägt an seiner Unterseite eine zu einer Tuftingmaschine gehörige Nadelbarre 22, die ihrerseits mit nach unten weisenden Nadeln 24 versehen ist, von denen nur einige dargestellt sind. Jeweils mehrere, gegenseitig beabstandete Stößel 20 tragen eine Nadelbarre 22.

Der Stößel 20 bewegt sich mit hoher Geschwindigkeit, beispielsweise mit etwa 1000 Hüben pro Minute, wobei die Gleitführungsbuchsen 16, 18 für eine ölfreie Trockenschmierung bei relativ geringem Bewegungsspiel und guter Wärmeabfuhr sorgen.

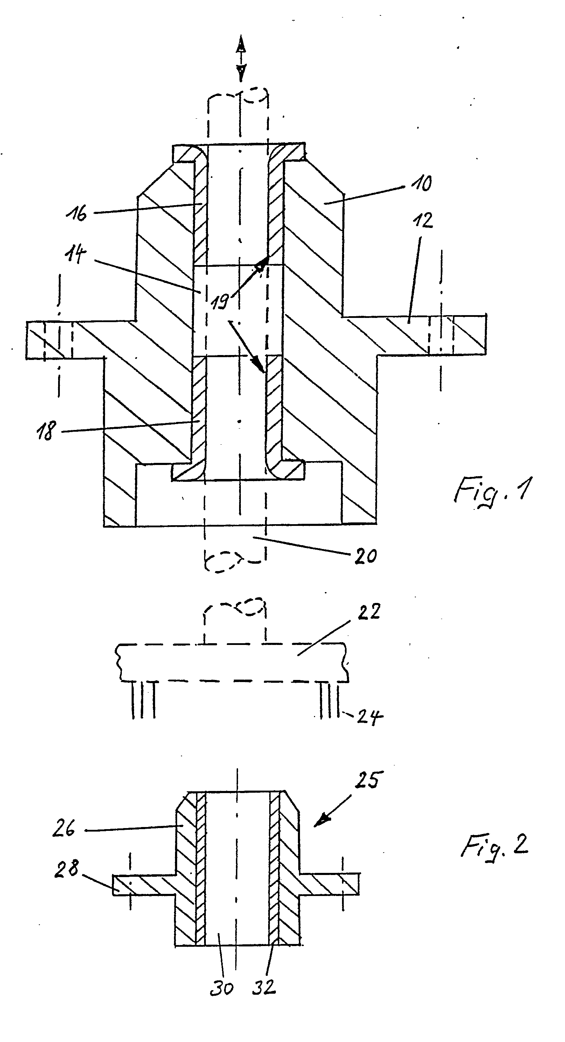

Bei der Ausführungsform aus Figur 2 ist das gesamte Führungsglied als Gleitführungsbuchse 25 ausgeführt. Es besteht aus einem gut wärmeleitfähigen, ausreichend stabilen Träger 26, wie einer Aluminium-Legierung, mit zum Befestigen dienenden Flanschen 28. Ein zentraler Durchlaß 30 ist mit einer Beschichtung 32 versehen, die die Gleitfläche der Gleitführungsbuchse 25 darstellt.

Im Prinzip sind die Gleitführungsbuchsen 16, 18 aus Figur 1 und die Gleitführungsbuchse 25 aus Figur 2 hinsichtlich eines wärmeleitfähigen Trägers und einer darauf innenseitig angebrachten Beschichtung gleichartig ausgebildet und aufgebaut. Während bei Figur 1 ein preiswerter Buchsenhalter die aufwendigen Gleitführungsbuchsen aufnimmt, bildet die Gleitführungsbuchse aus Figur 2 gleichzeitig auch das gesamte Führungsglied.

Für die Beschichtung 19, 32 und das Trägermaterial der Gleitführungsbuchsen 16, 18, 25 kommen verschiedene Stoffe in Frage, sofern sichergestellt ist, daß eine ausreichende Trockenschmierfähigkeit und eine gute Wärmeableitung gewährleistet sind. Die letztere kann auch durch ein geeignetes Stößelmaterial, wie eine Kupfer-Beryllium-Legierung, verbessert werden.

Ein solches Führungsglied für Tuftingmaschinen verbessert deren Gebrauchswert in erheblichem Maße, da die allseits bekannten und bisher unvermeidbaren Ölflecken trotz beliebig langer Stillstandszeiten vollständig vermieden werden können und sich ein langlebiger, vibrationsfreier Betrieb der Stößelbewegungen erzielen läßt.

Besonders zweckmäßig ist auch eine nicht dargestellte einstückige Gleitführungsbuchse als Führungsglied, die zwischen ihren tragenden Lagerbereichen einen vergrößerten Innendurchmesser hat. Dadurch sind die Lagerbereiche stets fluchtend, was den Buchseneinbau wesentlich erleichtert und den Betrieb verbessert.

**Ansprüche**

1. Führungsglied zum etwa vertikalen Führen der die Nadelbarren von Tuftingmaschinen hin- und herbewegenden Stößel, dadurch gekennzeichnet,

EP 0 347 744 A1

daß das Führungsglied als wartungsfreie, insbesondere ölfreie, Gleitführungsbuchse (16, 18; 25) ausgebildet ist oder zumindest eine solche Gleitführungsbuchse aufweist.

2. Führungsglied nach Anspruch 1, dadurch gekennzeichnet, daß die Gleitführungsbuchse (16, 18; 25) einen gut wärmeleitfähigen Träger (26) und eine die inneren Gleitflächen bildende reibungsarme Beschichtung (19; 32) aufweist.

3. Führungsglied nach Anspruch 2, dadurch gekennzeichnet, daß die Beschichtung (19; 32) Polytetrafluoräthylen enthält oder ist.

4. Führungsglied nach Anspruch 3, dadurch gekennzeichnet, daß die Dicke der Beschichtung (19; 32) ca. 40 bis 60 µm beträgt.

5. Führungsglied nach Anspruch 3 oder 4, gekennzeichnet durch eine im Schwefelsäureelektrolyten hartanodisierte Beschichtung (19; 32).

6. Führungsglied nach einem der Ansprüche 2 bis 5, dadurch gekennzeichnet, daß der Träger (26) aus einer Aluminiumlegierung besteht.

7. Führungsglied nach Anspruch 6, dadurch gekennzeichnet, daß der Träger (26) etwa 6,2 % Zn, 2,2 % Mg und 1,2 % Cu enthält.

8. Führungsglied nach Anspruch 6 oder 7, gekennzeichnet durch einen thermisch vergüteten oder geschmiedeten Träger (26) mit einer Brinellhärte von ca. 170 HB.

9. Führungsglied nach einem der Ansprüche 1 bis 8, dadurch gekennzeichnet, daß der Innendurchmesser der Gleitführungsbuchse (16, 18; 25) ein maximales Stößelspiel von etwa 20 bis 30 µm zuläßt.

10. Führungsglied nach einem der Ansprüche 1 bis 8, dadurch gekennzeichnet, daß der Innendurchmesser der Gleitführungsbuchse (16,18;25) ein Stößelspiel von etwa 10 bis 30 µm, vorzugsweise von 10 bis 20 µm, zuläßt.

11. Führungsglied nach einem der Ansprüche 1 bis 10, dadurch gekennzeichnet, daß eine einstückig ausgebildete Gleitführungsbuchse zwei unter gegenseitigem Längsabstand angeordnete, fluchtende Lagerbereiche und zwischen diesen einen gegenüber den Lagerbereichen etwas vergrößerten Innendurchmesser aufweist.

12. Führungsglied nach einem der Ansprüche 1 bis11, gekennzeichnet durch einen Buchsenhalter (10) mit einem Durchlaß (14) und durch zumindest eine in diesem durch Preßsitz und/oder durch Verklebung gehaltene Gleitführungsbuchse (16, 18).

13. Führungsglied nach Anspruch 12, gekennzeichnet durch zwei in den endseitigen Bereichen des Durchlasses (14) unter gegenseitigem Längsabstand gehaltene Gleitführungsbuchsen (16, 18).

14. Führungsglied nach einem der Ansprüche 1 bis 13, gekennzeichnet durch eine Gleitführungsbuchse (16, 18; 25) mit einer Gleitflächen-Beschichtung (19; 32) aus Molybdändisulfit.

15. Führungsglied nach Anspruch 14, gekennzeichnet durch eine durch Kathoden- bzw. Gleichstromzerstäubung aufgebrachte Beschichtung (19; 32) aus Molybdändisulfit.

16. Führungsglied nach einem der Ansprüche 1 bis 15, gekennzeichnet durch eine Gleitführungsbuchse (16, 18; 25) mit einem auf die Gleitfläche aufgespritzen oder aufgedampften Trockenschmiermittel.

17. Führungsglied nach einem der Ansprüche 1 bis 16, gekennzeichnet durch eine Kombination mit einem Stößel (20) aus einer Kupfer-Beryllium-Legierung.

18. Anwendung einer wartungsfreien, insbesondere ölfreien, Gleitführungsbuchse zum etwa vertikalen Führen der die Nadelbarren von Tuftingmaschinen hin- und herbewegenden Stößel.

4

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| X | DE-A-1485463 (ELLISON TUFTING MACHINERY) <br> * Figur 1 * | 1, 11-13, 18 | D05C15/00 <br> F16C29/02 |
| Y | | 3, 14 | |
| | --- | | |
| Y | FR-A-2371600 (CHROMEX) <br> * Seite 2, Zeile 12 - Zeile 22 * | 3 | |
| A | * Seite 4, Zeile 2 - Zeile 9 * | 1, 4, 9, 10, 18 | |
| | --- | | |
| Y | PATENT ABSTRACTS OF JAPAN <br> vol. 007, no. 177 (M-233)() 05 August 1983, <br> & JP-A-56 180736 (TAIHOU KOGYO) 16 Mai 1983, <br> * siehe das ganze Dokument * | 14 | |
| | --- | | |
| X | PATENT ABSTRACTS OF JAPAN <br> vol. 9, no. 231 (M-414)(1954) 18 September 1985, <br> & JP-A-60 088217 (BROTHER KOGYO) 18 Mai 1985, <br> * siehe das ganze Dokument * | 1, 18 | |
| | --- | | RECHERCHIERTE SACHGEBIETE (Int. Cl.4 ) |
| A | PATENT ABSTRACTS OF JAPAN <br> vol. 8, no. 182 (M-319)(1619) 22 August 1984, <br> & JP-A-59 073622 (NOBUYUKI TSUBOI) 25 April 1984, <br> * siehe das ganze Dokument * | 1, 12, 18 | D05C <br> F16C <br> D05B |
| | --- | | |
| A | DE-A-2239555 (ZWICK & CO.) <br> * Seite 7, Zeile 7 - Zeile 11 * | 1, 3, 9-12, 18 | |
| | --- | | |
| A | PATENT ABSTRACTS OF JAPAN <br> vol. 007, no. 095 (M-209)() 21 April 1983, <br> & JP-A-56 116468 (MITSUBISHI KINZOKU) 04 Februar 1983, <br> * siehe das ganze Dokument * | 16 | |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 18 SEPTEMBER 1989 | RAYBOULD B.D.J. |